# EUROPEAN PATENT SPECIFICATION

(11) **EP 2 988 904 B1**
(45) Date of publication and mention of the grant of the patent: **23.08.2023**
(21) Application number: 14787646.0
(22) Date of filing: 25.04.2014
(51) Int. Cl.: B23K 26/035, B23K 26/06, B22F 3/105, B23K 26/34, B23K 26/042, B33Y 10/00, B33Y 30/00, B29C 67/00, B23K 26/342

(54) **SELECTIVE LASER MELTING SYSTEM**
SELEKTIVES LASERSCHMELZVERFAHREN
SYSTÈME DE FUSION SÉLECTIVE PAR LASER

(30) Priority: 26.04.2013 US 201361816483 P
(43) Date of publication of application: 02.03.2016
(73) Proprietor: Raytheon Technologies Corporation, Farmington, CT 06032 (US)
(72) Inventor: MIRONETS, Sergey, Ontario L7R 0E9 (CA); KLUCHA, Agnes, Shelburne, VT 05492 (US); TWELVES JR., Wendell, V., Glastonbury, CT 06033 (US)
(74) Representative: Dehns
(86) International application number: PCT/US2014/035514
(87) International publication number: WO 2014/176536

(56) References cited:
- EP-A1- 2 628 585
- WO-A1-2009/026520
- DE-A1-102010 049 460
- US-A- 4 118 109
- US-A- 4 822 974
- US-A- 5 597 589
- US-A1- 2002 152 002
- US-A1- 2007 193 644
- US-A1- 2012 237 745
- US-A1- 2013 101 746
- US-B1- 6 861 613

## Description

### BACKGROUND

The described subject matter relates generally to the field of additive manufacturing. In particular, the subject matter relates to laser beam steering control in an additive manufacturing environment.

Additive manufacturing refers to a category of manufacturing methods characterized by the fact that the finished part is created by layer-wise construction of a plurality of thin sheets of material. Additive manufacturing may involve applying liquid or powder material to a workstage, then doing some combination of sintering, curing, melting, and/or cutting to create a layer. The process is repeated up to several thousand times to construct the desired finished component or article.

Various types of additive manufacturing are known. Examples include stereo lithography (additively manufacturing objects from layers of a cured photosensitive liquid), electron beam melting (using a powder as feedstock and selectively melting the powder using an electron beam), laser additive manufacturing (using a powder as a feedstock and selectively melting the powder using a laser), and laser object manufacturing (applying thin solid sheets of material over a workstage and using a laser to cut away unwanted portions).

In additive manufacturing, conventional apparatus utilize a galvanometer type scanner to melt powder layers in an X-Y linear orientation. This linear path is broken up into smaller sections, called rastering. This causes discontinuity in the scanning paths, and result in small but significant areas of unmelted powder therebetween, which operates as stress risers in the finished part. Continuous parametric scanning paths have been attempted, but this normally requires substantial and highly precise multi-axis movements of the laser, and in conventional additive manufacturing equipment, the path must still be controlled with Cartesian coordinates.

US 5,597,589 relates to apparatus for producing parts by selective sintering. US 4,118,109 relates to optical apparatus for controlling the direction of a beam of optical radiation.

### SUMMARY

An additive manufacturing apparatus according to claim 1 is provided.

A method of operating an additive manufacturing apparatus according to claim 8 is provided.

### BRIEF DESCRIPTION OF THE DRAWINGS

FIG. 1 schematically depicts an additive manufacturing apparatus.
FIG. 2 shows a beam steering assembly for the example laser powder deposition machine.
FIG. 3A is a sectional view of the beam steering assembly in a first configuration.
FIG. 3B is a sectional view of the beam steering assembly in a second configuration.
FIG. 3C is a sectional view of the beam steering assembly in a third configuration.
FIG. 4 shows an example scanning path relative to the beam steering axis.
FIG. 5 shows the steps of a method for operating an additive manufacturing apparatus.

### DETAILED DESCRIPTION

A powder bed deposition apparatus can comprise a beam steering assembly including at least one optical element having one surface normal to the X-Y plane and another surface canted relative to the X-Y plane. In certain embodiments, the beam steering assembly can include a Risley prism having a first wedge prism and a second wedge prism each rotatable about a beam steering axis. The beam steering axis can be perpendicular to a working or build surface.

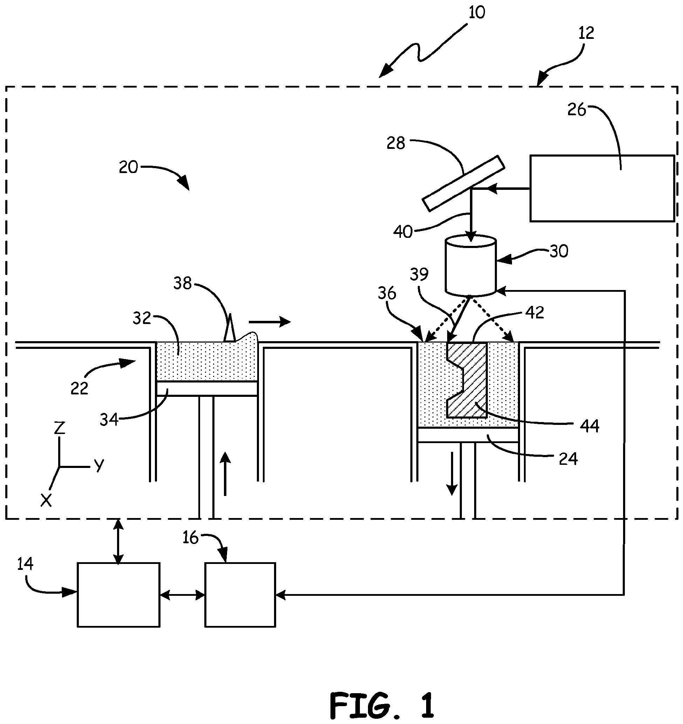

FIG. 1 is a schematic of an additive manufacturing process. Process 10 includes manufacturing chamber 12 containing devices that produce solid freeform objects by additive manufacturing. Embodiments include apparatus that fabricate objects by direct laser sintering (DLS) manufacturing, direct laser melting (DLM) manufacturing, selective laser sintering (SLS) manufacturing, selective laser melting (SLM) manufacturing, laser engineering net shaping (LENS) manufacturing, electron beam melting (EBM) manufacturing, direct metal deposition (DMD) manufacturing, and others known in the art.

Manufacturing is controlled by manufacturing control system 14 and beam steering controller 16. Controllers 14, 16 may be separate or integrated, and can communicate with each other and with device 20. Control systems 14, 16 may allow fully automatic, semi-automatic, or manual control of the additive manufacturing process in manufacturing chamber 12. Manufacturing chamber 12 can be provided with an environment required to produce flaw free solid freeform objects having structural integrity, dimensional accuracy, and required surface finish. In certain embodiments, a protective partial pressure or vacuum atmosphere may be required. This may be under the control of manufacturing control system 14 or a separate environmental controller (not shown).

A non-limiting example embodiment of apparatus 10 is illustrated in FIG. 1 wherein selective laser sintering (SLS) device 20 is shown housed in manufacturing chamber 12. SLS device 20 comprises powder storage chamber 22, build platform 24, energy beam generator 26, mirror 28, and beam steering apparatus 30. During operation of SLS device 20, powder 32 is fed upward by piston 34 and is spread over build surface 36 by roller or recoater blade 38. After powder 32 is spread onto build surface 36, energy beam generator 26 is activated to direct a laser or electron beam 39 along beam path 40. Here, beam 39 is directed along path 40 from generator 26 toward mirror 28 and into beam steering apparatus 30. As explained in more detail below, beam steering apparatus 30 includes at least one continuously rotatable optical element adapted to receive the oncoming beam 39 and steer it over build surface 36. Steering of beam 39 sinters selective areas of powder 32 to form a single build layer 42 of solid object 44, and to adhere the sintered areas to the underlying platform (or a preceding build layer) according to a computer model of object 44 stored in an STL memory file. Roller or recoater 38 is returned to a starting position, piston 34 advances to expose another layer of powder, and build platform 24 indexes down by one layer thickness and the process repeats for each successive build surface 36 until solid freeform object 44 is completed. SLS device 20 is only one example of solid freeform manufacturing apparatus and is not meant to limit the invention to any single machine known in the art.

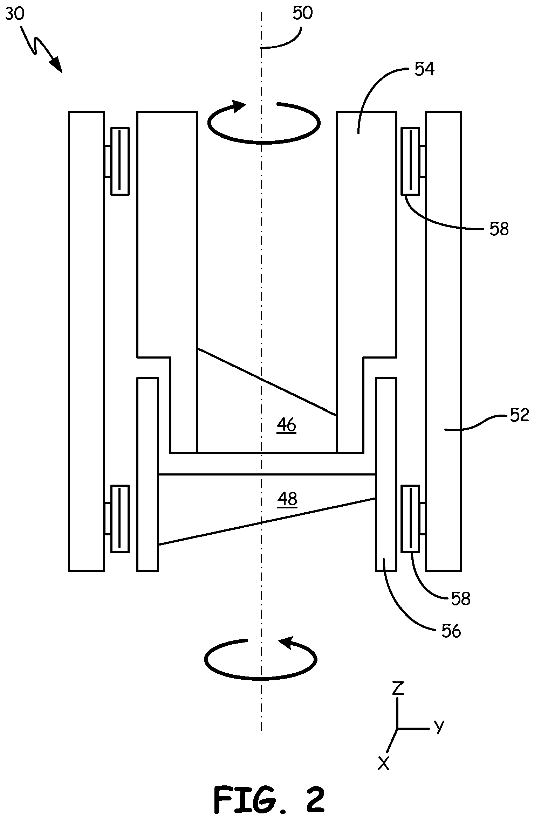

In certain embodiments, mirror 28 can be omitted. In certain other embodiments, beam generator 26 and optional mirror(s) 28 can be incorporated into beam steering apparatus 30. In the example of FIG. 1, each build layer 42 is formed and adhered at a build location disposed along the X-Y plane, which is spaced apart from laser beam generator 26. A central axis and/or beam steering axis of beam steering assembly 30 is disposed along beam travel path 40 so that beam 39 is directed along path 40 and through beam steering assembly 30. The continuously rotatable optical element(s) of beam steering assembly 30 (shown in FIG. 2) can be controlled to selectively steer beam 39 in a continuous parametric or other non-linear scanning path over each successive build surface 36. An example of beam steering assembly 30 is shown in subsequent figures.

FIG. 2 shows beam steering assembly 30 with first optical element 46 and second optical element 48 disposed adjacent thereto. Each is continuously rotatable about beam steering axis 50 and retained in housing or case 52. Relative and absolute rotational velocities of optical elements 46, 48 are controlled to form continuous parametric or other nonlinear scanning paths for selective melting of powder 32 (shown in FIG. 1).

Conventional additive manufacturing apparatus utilize a galvanometer type scanner to melt powder layers in a linear or X-Y orientation. This linear path is broken up into smaller sections, called rastering. This causes discontinuity in the scanning paths, and result in small but significant areas of unmelted powder therebetween, which operates as stress risers in the finished part, particularly just under the surface. Continuous parametric scanning paths have been attempted using conventional rastering movements, but this still requires breaking the non-linear path down into miniscule X-Y movements of the laser apparatus, lenses, and/or mirrors. This is because conventional additive manufacturing equipment requires that the steering apparatus be controlled with Cartesian coordinates even when attempting to steer the beam in a non-linear manner.

Here, optical elements 46, 48 are supported to housing 52 and can be driven, for example by dedicated brushed or brushless electric motors which include respective rotors 54, 56, and stators 58. Depending on the exact configuration, rotors 54, 56 can be supported by bearings of any suitable type (not shown).

In certain embodiments, optical elements 46, 48 form a Risley prism. In certain of these embodiments, the second wedge prism can be larger than the first wedge prism. This can be done to ensure the entire beam passes through both optical elements 46, 48 at various deflection angles. Optra, Inc., of Topsfield, Massachusetts, USA, makes several compact Risley prism-based apparatus for use in laser guidance systems, obstacle avoidance, optical communications, and laser machining. Such apparatus are not known to have been successfully adapted or implemented in previous additive manufacturing apparatus or processes.

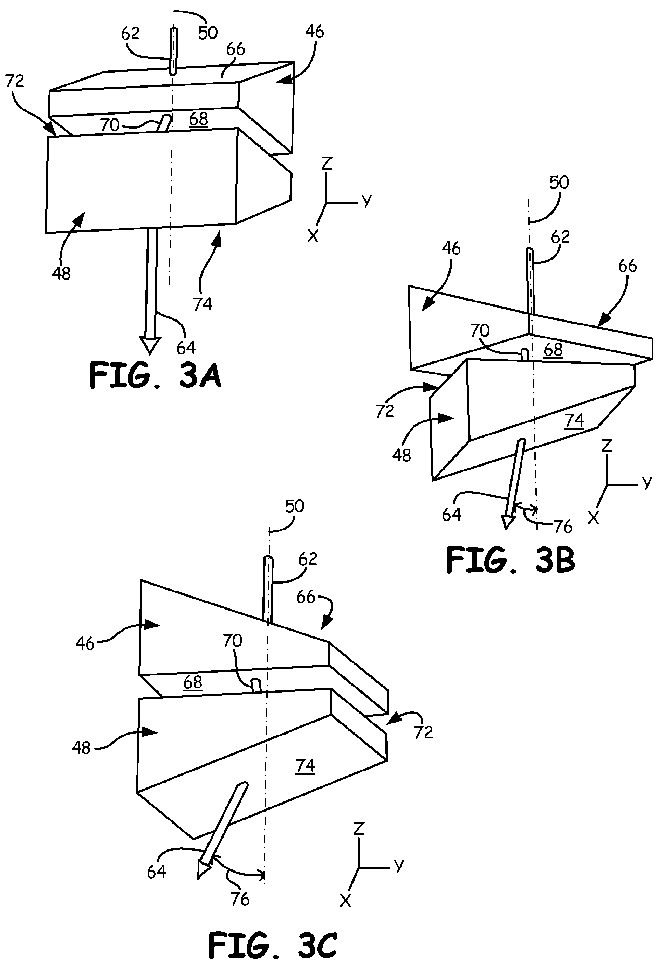

FIGS. 3A-3C each show beam steering angles based on instantaneous positioning of first optical element 46 and second optical element 48. First and second optical elements 46, 48 can be phase-offset from each other to translate incoming beam 62 into outgoing or steered beam 64.

In this example, first optical element 46 is a wedge prism which comprises first beam input surface 66 and first beam output surface 68, each intersected by beam steering axis 50. First beam input surface 66 is canted relative to first beam output surface 68, which can be disposed normal to the X-Y plane. Similarly, second optical element 48 comprises second beam input surface 72 and second beam output surface 74 also each intersected by beam steering axis 50. First beam input surface 66 can be adapted to receive incoming beam 62 by facing the oncoming laser beam (e.g., from laser beam generator 26 and/or mirror 28 along beam path 40 shown in FIG. 1. At the same time second beam output surface 74 can face build location 24 also shown in FIG. 1.

First beam input surface 66 and first beam output surface 68 occupy respective first beam input and output planes, each of which depend on the instantaneous rotational position of first optical element 46 about beam steering axis 50. This defines a first beam deflection angle relative to the X-Y plane that is substantially equal to the differential angle between the planes of first beam input surface 66 and first beam output surface 68. When the first beam output plane is substantially parallel to the X-Y plane, the first beam deflection angle is substantially equivalent to the angle of the first beam input plane relative to the X-Y plane, and intermediate beam 70 exits from first beam output surface 68 at a constant radial distance from beam steering axis 50.

Second beam input surface 72 occupies a second beam input plane, which is substantially parallel to both first beam output surface 68, and to the X-Y plane. Similarly, the second beam input and output planes depend on the instantaneous rotational position of second optical element 48 about beam steering axis 50. This results in a second beam deflection angle relative to the X-Y plane that is substantially equal to the differential angle between the planes of second beam input surface 72 and second beam output surface 74. When the first beam output plane is substantially parallel to the X-Y plane, the first beam deflection angle is substantially equivalent to the angle of the first beam input plane relative to the X-Y plane.

In certain embodiments, second beam output surface 74 can be complementary to first beam input surface 66, and first beam output surface 68 and second beam input surface 72 can both be parallel to the X-Y plane. In these embodiments, and when first and second optical elements 46, 48 are phase-offset by about 180° as shown in FIG. 3A, the first and second deflection angles caused by each respective optical element 46, 48 will generally offset each other. This combination acts effectively as a parallel plate with little or no net deflection of outgoing or steered beam 64 relative to incoming beam 62. This results in an effective beam steering angle of about 0°, with outgoing or steered beam 64 being generally parallel to, or even coincident with, beam steering axis 50.

In FIG. 3B, first and second optical elements 46, 48 are phase-offset by less than 180° resulting in a small deflection and beam steering angle relative to incoming beam 62 and beam steering axis 50. When first and second optical elements 46, 48 are rotated at the same velocity, a relatively small circular scanning path is formed by outgoing or steered beam 64 about beam steering axis 50.

In FIG. 3C, first and second optical elements 46, 48 are not phase-offset and thus both refract light in the same direction. First and second optical elements 46, 48 act as a single prism with twice the deflection angle as the individual elements. This results in maximum deflection or beam steering angle 76 relative to incoming beam 62 and beam steering axis 50. When first and second optical elements 46, 48 are rotated at the same velocity, a large circular scanning path is formed by outgoing or steered beam 64 about beam steering axis 50.

Any point in between those in FIGS 3A-3C can be achieved by adjusting the relative phase-offset between first and second optical elements 46, 48 to obtain the desired deflection or beam steering angle 76 of steered beam 64. The radius of a circular scanning path can be determined based on the phase-offset and beam steering angle 76 when first and second optical elements 46, 48 are rotated at the same velocity.

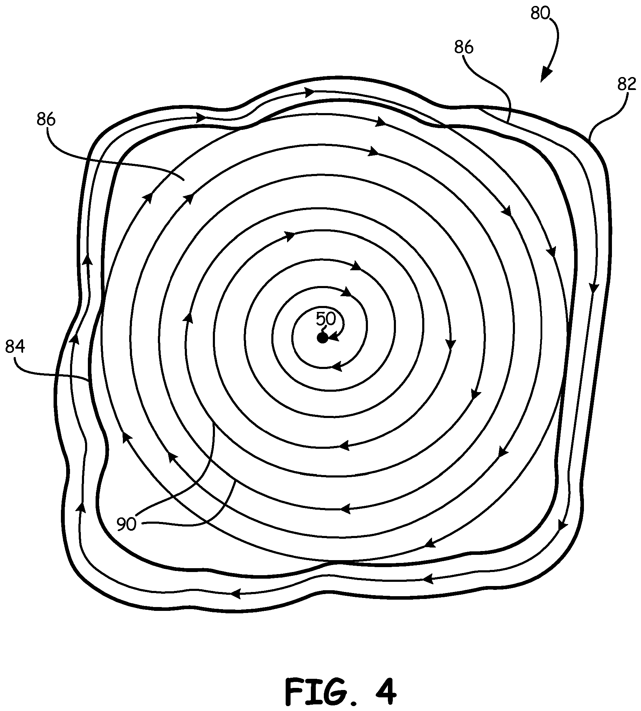

FIG. 4 shows a continuous non-linear scanning path 82 for workpiece build layer 80 relative to beam steering axis 50. To form a continuous non-linear scanning path 82, the rotational velocity of one or both optical elements 46, 48 can be periodically and momentarily adjusted as steered beam 64 (shown in FIGS. 3A-3C) travels over workpiece build layer 80. By slightly slowing or speeding up rotation one or both optical elements 46, 48 the phase-offset angle is changed, as is the resulting beam steering angle 76 relative to beam steering axis 50 (also shown in FIGS. 3A-3C).

In the example of FIG. 4, outgoing beam 64 can be steered in a non-linear scanning path. In addition to relative velocity and phase-offset angle, the absolute rotational velocities can also be adjusted to provide different scanning speeds for different melting solidification needs. Contour exposure parameters about perimeter 82 usually utilize lower beam power and faster scanning speeds, as compared to the power and scanning speeds used in core 84 of each workpiece build layer 80. The lower power and faster speed improves surface finish of perimeter 82.

Scanning path 86 can begin first about perimeter 82 of workpiece build layer 80, then through transition area 88 and into core 84. After one or more scans about perimeter 82, transition area 88 is scanned, then core 84 without breaking the non-linear scanning path. Portion(s) of core 84 can be scanned, for example in connected, substantially concentric circles 90 as seen in FIG. 4.

In traditional X-Y rastering, unsintered powder sometimes remains around transition areas between the perimeter and core. This is because the contour or perimeter scanning is done separately from the core scanning, which is used primarily for better surface finish and dimensional accuracy. Since the issue of unsintered powder can be dealt with using post-processing steps (e.g., consolidation), it has been traditionally preferred to have unsintered powder instead of oversintered material despite additional processing costs.

However, beam steering assembly 30 provides non-linear beam steering path 86 over each workpiece build layer 80, which allows perimeter scanning and core scanning to be integrated into one, and the issue of unsintered powder to be virtually eliminated. This comes from the ability to precisely control rotational velocities of optical elements 46, 48, while at the same time managing the absolute rotational velocities, as well as any phase-offset between optical elements 46, 48 (shown in FIGS. 2-3C).

FIGS. 1-4 show examples where a single beam is steered by a single beam steering apparatus to a single build platform. In certain embodiments, a plurality of beams (via beam splitter or multiple beam generators) is passed through a corresponding plurality of Risley prisms for synchronous scanning. Multiple build platforms can be implemented as well.

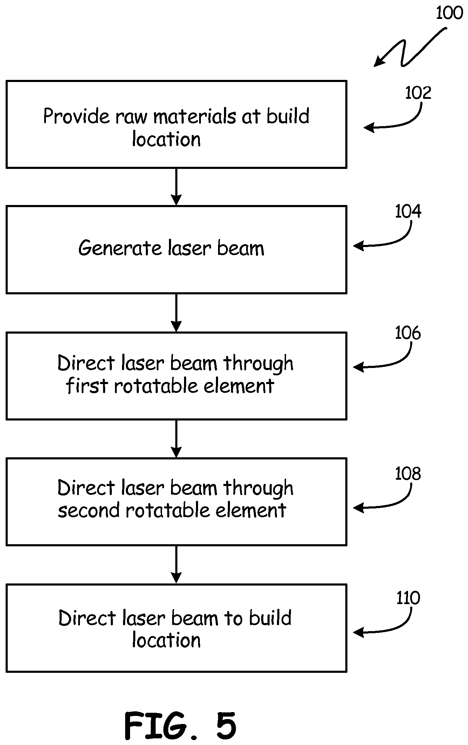

FIG. 5 shows steps of method 100 for operating an additive manufacturing apparatus. Step 102 includes providing raw materials such as powder feedstock to a build location (e.g., a working or build platform). The build location can be disposed along an X-Y plane. As part of step 104, one or more laser beams can be generated at a beam starting location spaced apart from the build location. At step 106, the laser beam is directed through a first optical element disposed along a beam travel path between the beam starting location and the build location. Step 108 includes directing the laser beam through a second optical element disposed along the beam travel path. At step 110, the laser beam then exits the second optical element toward a build location.

As shown in FIG. 2, the first and second optical elements can be continuously rotatable about a beam steering axis. In certain embodiments, the first optical element is a first wedge prism such that directing the laser beam through a first beam input surface, occupying a first beam input plane, defines a first beam input angle relative to the X-Y plane. Directing the laser beam through a first beam output surface, occupying a first beam output plane, defines a first beam output angle relative to the X-Y plane. In certain embodiments, the second optical element is a second wedge prism such that directing the laser beam through a second beam input surface, occupying a second beam input plane, defines a second beam input angle relative to the X-Y plane. Directing the laser beam through a second beam output surface, occupying a second beam output plane, defines a second beam output angle relative to the X-Y plane. In these embodiments, a difference between the second beam input angle and the second beam output angle defines a second beam deflection angle relative to the beam steering axis. A difference between the first and second beam deflection angles can determine the overall beam deflection relative to the beam steering axis.

Rotating the elements by imparting at least one of a first rotational velocity to the first optical element, and a second rotational velocity to the second optical element, results in steering the laser beam selectively over at least a portion of the build location. When a magnitude and direction of the first rotational velocity is equal to that of the second rotational velocity, the resulting portion of the scanning path is substantially circular. The radius of the circular portion of the scanning path is determined based on the phase-offset between the optical elements.

By rotating the first and/or second optical elements (e.g., wedge prisms), this effectively changes the overall beam deflection angle in a continuous fashion. Adjusting the instantaneous phase-offset between the optical elements (see, e.g., FIGS. 3A-3C) while also rotating them causes a resulting portion of the scanning path to be noncircular and nonlinear. A controller manages (relative and absolute) rotational speeds and phase-offset of each optical element so as to define the continuous steering path of each layer. As noted above, the second optical element / wedge prism can be larger than the first optical element / wedge prism to ensure the entire beam width can pass entirely through both elements at all deflection angles.

The steps can be repeated to make an article by additive manufacturing. In this process, occurrence of unmelted powder below the surface is eliminated along with the resulting stress risers in the finished near-net shape component, all without sacrificing surface finish.

### Discussion of Possible Embodiments

The following are non-exclusive descriptions of possible embodiments of the present invention:
An additive manufacturing apparatus comprises a laser beam generator operable to generate at least one laser beam; a working surface including a build surface disposed along an X-Y plane and spaced apart from the laser beam generator; a first optical element rotatably supported in a housing and disposed along a travel path of the at least one laser beam, between the laser beam generator and the build surface, the first optical element continuously rotatable about a beam steering axis perpendicular to the build surface; a second optical element rotatably supported in the housing and disposed adjacent to the first optical element along the travel path of the at least one laser beam, the second optical element continuously rotatable about the beam steering axis independently of the first optical element; and a controller to manage relative and absolute rotational speeds of the first and second optical elements, such that the first and second optical elements redirect the at least one laser beam from the beam generator to form a continuous nonlinear scanning path along and over an entirety of the build surface without deactivating the laser beam generator, the build surface including a perimeter portion, a transition portion, and a core portion; wherein: the first optical element comprises a first beam input surface and a first beam output surface each intersected by the beam steering axis,wherein a difference between the first beam input angle and the first beam output angle defines a first beam deflection angle relative to the beam steering axis; wherein the second optical element comprises a second beam input surface and a second beam output surface each intersected by the beam steering axis; wherein the first beam output surface is parallel to the second beam input surface and the X-Y plane.

A method of operating an additive manufacturing apparatus as described hereinbefore, comprises providing raw materials to the build surface disposed along an X-Y plane on a working surface of the apparatus; generating the laser beam at a beam starting location spaced apart from the build surface; and directing the laser beam through the first optical element and the second, adjacent optical element each rotatably supported in the housing and disposed along the beam travel path between the beam starting location and the build, the first optical element and second optical element independently and continuously rotatable about a beam steering axis perpendicular to the build surface; wherein the controller manages relative and absolute rotational speeds of the first and second optical elements, such that the first and second optical elements redirect the laser beam from the beam generator to form the continuous nonlinear scanning path along and over the entirety of the build surface without deactivating the laser beam generator, the build surface including the perimeter portion, the transition portion, and the core portion.

## Claims

1. An additive manufacturing apparatus comprising:
a laser beam generator (26) operable to generate at least one laser beam;
a working surface including a build surface (36) disposed along an X-Y plane and spaced apart from the laser beam generator;
a first optical element (46) rotatably supported in a housing and disposed along a travel path of the at least one laser beam, between the laser beam generator and the build surface (36), the first optical element continuously rotatable about a beam steering axis perpendicular to the build surface (36);
a second optical element (48) rotatably supported in the housing and disposed adjacent to the first optical element (46) along the travel path of the at least one laser beam, the second optical element (48) continuously rotatable about the beam steering axis independently of the first optical element (46); and
a controller to manage relative and absolute rotational speeds of the first and second optical elements (46, 48), such that the first and second optical elements (46, 48) redirect the at least one laser beam from the beam generator (26) to form a continuous nonlinear scanning path along and over an entirety of the build surface (36) without deactivating the laser beam generator, the build surface including a perimeter portion, a transition portion, and a core portion; wherein:
the first optical element (46) comprises a first beam input surface (66) and a first beam output surface (68) each intersected by the beam steering axis,
wherein a difference between the first beam input angle and the first beam output angle defines a first beam deflection angle relative to the beam steering axis;
wherein the second optical element (48) comprises a second beam input surface (72) and a second beam output surface (74) each intersected by the beam steering axis; **characterized in that** the first beam output surface (68) is parallel to the second beam input surface (72) and the X-Y plane.

2. The additive manufacturing apparatus of claim 1, wherein:
the first beam input surface (66) occupies a first beam input plane defining a first beam input angle relative to the X-Y plane, and the first beam output surface (68) occupies a first beam output plane defining a first beam output angle relative to the X-Y plane.

3. The additive manufacturing apparatus of claim 1 or 2, wherein
the second beam input surface (72) occupies a second beam input plane defining a second beam input angle relative to the X-Y plane, and a second beam output surface (74) occupies a second beam output plane defining a second beam output angle relative to the X-Y plan, a difference between the second beam input angle and the second beam output angle defining a continuously variable second beam deflection angle relative to the beam steering axis.

4. The additive manufacturing apparatus of claim 1 or 3, wherein:
the first beam input angle is complementary to the second beam output angle.

5. The additive manufacturing apparatus of claim 1, 3 or 4, wherein:
the first optical element (46) comprises a first wedge prism with the input surface of the first optical element adapted to receive an oncoming laser beam from the laser beam apparatus; and
the second optical element (48) comprises a second wedge prism with an input surface of the second optical element adjacent to the output surface of the first wedge prism, and an outlet surface of the second optical element facing the build location.

6. The additive manufacturing apparatus of any preceding claim, wherein the beam steering axis is disposed normal to the X-Y plane, wherein an output of the laser beam generator is optionally aligned with the beam steering axis.

7. The additive manufacturing apparatus of any preceding claim, wherein
the controller is adapted to rotate the first optical element (46) at a variable first rotational velocity, rotate the second optical element (48) at a second variable rotational velocity, and thereby manage a phase-offset between the first and second optical elements (46, 48) to control an instantaneous beam steering angle over the entirety of the continuous nonlinear scanning path without deactivating the laser beam generator (26).

8. A method of operating an additive manufacturing apparatus according to claim 1, the method comprising:
providing raw materials to the build surface disposed along an X-Y plane on a working surface of the apparatus;
generating the laser beam at a beam starting location spaced apart from the build surface; and
directing the laser beam through the first optical element and the second, adjacent optical element each rotatably supported in the housing and disposed along the beam travel path between the beam starting location and the build, the first optical element and second optical element independently and continuously rotatable about a beam steering axis perpendicular to the build surface;
wherein the controller manages relative and absolute rotational speeds of the first and second optical elements, such that the first and second optical elements redirect the laser beam from the beam generator to form the continuous nonlinear scanning path along and over the entirety of the build surface without deactivating the laser beam generator, the build surface including the perimeter portion, the transition portion, and the core portion.

9. The method of claim 8, further comprising:
steering the laser beam parametrically over at least a portion of the build surface.

10. The method of claim 9, wherein the steering step comprises:
rotatably positioning the first optical element about the beam steering axis to vary a first beam deflection angle.

11. The method of claim 9 or 10, wherein the steering step comprises:
rotatably positioning the second optical element about the beam steering axis to vary a second beam deflection angle.

12. The method of any of claims 9 to 11, wherein the steering step comprises:
imparting at least one of: a first rotational velocity to the first optical element and a second rotational velocity to the second optical element; and
during the imparting step, controlling a phase offset of the first optical element and the second optical element to define a non-linear beam steering path over the build location relative to the beam steering axis.

13. The method of claim 12, wherein the first rotational velocity is different from the second rotational velocity.

14. The method of any of claims 8 to 13, wherein the first optical element comprises a first wedge prism, and the second optical element comprises a second wedge prism larger than the first wedge prism.

## Patentansprüche

1. Vorrichtung zur additiven Fertigung, umfassend:
einen Laserstrahlgenerator (26), der dazu betreibbar ist, mindestens einen Laserstrahl zu erzeugen;
eine Arbeitsfläche, beinhaltend eine Aufbaufläche (36), die entlang einer X-Y-Ebene angeordnet und von dem Laserstrahlgenerator beabstandet ist;
ein erstes optisches Element (46), das drehbar in einem Gehäuse gelagert und entlang eines Bewegungswegs des mindestens einen Laserstrahls zwischen dem Laserstrahlgenerator und der Aufbaufläche (36) angeordnet ist, wobei das erste optische Element kontinuierlich um eine Strahllenkungsachse senkrecht zur Aufbaufläche (36) drehbar ist;
ein zweites optisches Element (48), das in dem Gehäuse drehbar gelagert und neben dem ersten optischen Element (46) entlang des Bewegungswegs des mindestens einen Laserstrahls angeordnet ist, wobei das zweite optische Element (48) unabhängig von dem ersten optischen Element (46) kontinuierlich um die Strahllenkungsachse drehbar ist; und
eine Steuerung zum Verwalten der relativen und absoluten Drehgeschwindigkeiten des ersten und des zweiten optischen Elements (46, 48), sodass das erste und das zweite optische Element (46, 48) den mindestens einen Laserstrahl von dem Strahlgenerator (26) umlenken, um einen kontinuierlichen nichtlinearen Abtastweg entlang und über die gesamte Aufbaufläche (36) hinweg zu bilden, ohne den Laserstrahlgenerator zu deaktivieren, wobei die Aufbaufläche einen Umfangsabschnitt, einen Übergangsabschnitt und einen Kernabschnitt beinhaltet; wobei:
das erste optische Element (46) eine erste Strahleintrittsfläche (66) und eine erste Strahlaustrittsfläche (68) umfasst, die jeweils durch die Strahllenkungsachse geschnitten werden,
wobei eine Differenz zwischen dem ersten Strahleintrittswinkel und dem ersten Strahlaustrittswinkel einen ersten Strahlablenkungswinkel relativ zu der Strahllenkungsachse definiert;
wobei das zweite optische Element (48) eine zweite Strahleintrittsfläche (72) und eine zweite Strahlaustrittsfläche (74) umfasst, die jeweils durch die Strahllenkungsachse geschnitten werden; **dadurch gekennzeichnet, dass** die erste Strahlaustrittsfläche (68) parallel zu der zweiten Strahleintrittsfläche (72) und der X-Y-Ebene ist.

2. Vorrichtung zur additiven Fertigung nach Anspruch 1, wobei: die erste Strahleintrittsfläche (66) eine erste Strahleintrittsebene einnimmt, die einen ersten Strahleintrittswinkel relativ zu der X-Y-Ebene definiert, und die erste Strahlaustrittsfläche (68) eine erste Strahlaustrittsebene einnimmt, die einen ersten Strahlaustrittswinkel relativ zu der X-Y-Ebene definiert.

3. Vorrichtung zur additiven Fertigung nach Anspruch 1 oder 2, wobei
die zweite Strahleintrittsfläche (72) eine zweite Strahleintrittsebene einnimmt, die einen zweiten Strahleintrittswinkel relativ zu der X-Y-Ebene definiert, und eine zweite Strahlaustrittsfläche (74) eine zweite Strahlaustrittsebene einnimmt, die einen zweiten Strahlaustrittswinkel relativ zu der X-Y-Ebene definiert, wobei eine Differenz zwischen dem zweiten Strahleintrittswinkel und dem zweiten Strahlaustrittswinkel einen kontinuierlich variablen zweiten Strahlablenkungswinkel relativ zu der Strahllenkungsachse definiert.

4. Vorrichtung zur additiven Fertigung nach Anspruch 1 oder 3, wobei:
der erste Strahleintrittswinkel komplementär zu dem zweiten Strahlaustrittswinkel ist.

5. Vorrichtung zur additiven Fertigung nach Anspruch 1, 3 oder 4, wobei:
das erste optische Element (46) ein erstes Keilprisma umfasst, wobei die Austrittsfläche des ersten optischen Elements dazu ausgelegt ist, einen entgegenkommenden Laserstrahl von der Laserstrahlvorrichtung zu empfangen; und
das zweite optische Element (48) ein zweites Keilprisma umfasst, wobei eine Austrittsfläche des zweiten optischen Elements an die Austrittsfläche des ersten Keilprismas angrenzt und eine Austrittsfläche des zweiten optischen Elements der Aufbaustelle zugewandt ist.

6. Vorrichtung zur additiven Fertigung nach einem der vorhergehenden Ansprüche, wobei die Strahllenkungsachse senkrecht zu der X-Y-Ebene angeordnet ist, wobei ein Austritt des Laserstrahlgenerators optional mit der Strahllenkungsachse ausgerichtet ist.

7. Vorrichtung zur additiven Fertigung nach einem vorhergehenden Anspruch, wobei
die Steuerung dazu ausgelegt ist, das erste optische Element (46) mit einer variablen ersten Drehgeschwindigkeit zu drehen, das zweite optische Element (48) mit einer zweiten variablen Drehgeschwindigkeit zu drehen und dadurch den Phasenversatz zwischen dem ersten und dem zweiten optischen Element (46, 48) zu verwalten, um einen momentanen Strahllenkungswinkel über den gesamten kontinuierlichen nichtlinearen Abtastweg hinweg zu steuern, ohne den Laserstrahlgenerator (26) zu deaktivieren.

8. Verfahren zum Betreiben einer Vorrichtung zur additiven Fertigung nach Anspruch 1, wobei das Verfahren Folgendes umfasst:
Bereitstellen von Rohmaterialien für die Aufbaufläche, die entlang einer X-Y-Ebene auf einer Arbeitsfläche der Vorrichtung angeordnet ist;
Erzeugen des Laserstrahls an einer Strahlstartstelle, die von der Aufbaufläche beabstandet ist; und
Leiten des Laserstrahls durch das erste optische Element und das zweite benachbarte optische Element, die jeweils drehbar im Gehäuse gelagert und entlang des Bewegungswegs des Strahls zwischen der Strahlstartstelle und dem Aufbau angeordnet sind, wobei das erste optische Element und das zweite optische Element unabhängig und kontinuierlich um eine Strahllenkungsachse senkrecht zu der Aufbaufläche drehbar sind;
wobei die Steuerung die relativen und absoluten Drehgeschwindigkeiten des ersten und des zweiten optischen Elements verwaltet, sodass das erste und das zweite optische Element den Laserstrahl von dem Strahlgenerator umlenken, um den kontinuierlichen nichtlinearen Abtastweg entlang der und über die gesamte Aufbaufläche hinweg zu bilden, ohne den Laserstrahlgenerator zu deaktivieren, wobei die Aufbaufläche den Umfangsabschnitt, den Übergangsabschnitt und den Kernabschnitt beinhaltet.

9. Verfahren nach Anspruch 8, ferner umfassend:
Lenken des Laserstrahls parametrisch über mindestens einen Abschnitt der Aufbaufläche.

10. Verfahren nach Anspruch 9, wobei der Lenkungsschritt Folgendes umfasst:
drehbares Positionieren des ersten optischen Elements um die Strahllenkungsachse, um einen ersten Strahlablenkungswinkel zu variieren.

11. Verfahren nach Anspruch 9 oder 10, wobei der Lenkungsschritt Folgendes umfasst:
drehbares Positionieren des zweiten optischen Elements um die Strahllenkungsachse, um einen zweiten Strahlablenkungswinkel zu variieren.

12. Verfahren nach Anspruch 9 oder 11, wobei der Lenkungsschnitt Folgendes umfasst:
Aufbringen von mindestens einem von: einer ersten Drehgeschwindigkeit auf das erste optische Element und einer zweiten Drehgeschwindigkeit auf das zweite optische Element; und
während des Aufbringungsschritts Steuern eines Phasenversatzes des ersten optischen Elements und des zweiten optischen Elements, um einen nichtlinearen Strahllenkungsweg über die Aufbaustelle relativ zu der Strahllenkungsachse zu definieren.

13. Verfahren nach Anspruch 12, wobei sich die erste Drehgeschwindigkeit von der zweiten Drehgeschwindigkeit unterscheidet.

14. Verfahren nach einem der Ansprüche 8 bis 13, wobei das erste optische Element ein erstes Keilprisma umfasst und das zweite optische Element ein zweites Keilprisma umfasst, das größer als das erste Keilprisma ist.

## Revendications

1. Appareil de fabrication additive comprenant :
un générateur de faisceau laser (26) actionnable pour générer au moins un faisceau laser ;
une surface de travail comportant une surface de fabrication (36) disposée le long d'un plan X-Y et espacée du générateur de faisceau laser ;
un premier élément optique (46) supporté de manière rotative dans un boîtier et disposé le long d'un trajet de déplacement de l'au moins un faisceau laser, entre le générateur de faisceau laser et la surface de fabrication (36), le premier élément optique pouvant tourner en continu autour d'un axe de direction de faisceau perpendiculaire à la surface de fabrication (36) ;
un second élément optique (48) supporté de manière rotative dans le boîtier et disposé à côté du premier élément optique (46) le long du trajet de déplacement de l'au moins un faisceau laser, le second élément optique (48) pouvant tourner en continu autour de l'axe de direction du faisceau indépendamment du premier élément optique (46) ; et
un dispositif de commande pour gérer les vitesses de rotation relatives et absolues des premier et second éléments optiques (46, 48), de sorte que les premier et second éléments optiques (46, 48) redirigent l'au moins un faisceau laser du générateur de faisceau laser (26) pour former un trajet de balayage non linéaire continu le long et sur la totalité de la surface de fabrication (36) sans désactiver le générateur de faisceau laser, la surface de fabrication comportant une partie de périmètre, une partie de transition et une partie centrale ;
dans lequel :
le premier élément optique (46) comprend une première surface d'entrée du faisceau (66) et une première surface de sortie du faisceau (68) coupées chacune par l'axe de direction du faisceau,
dans lequel une différence entre le premier angle d'entrée du faisceau et le premier angle de sortie du faisceau définit un premier angle de déviation du faisceau par rapport à l'axe de direction du faisceau ;
dans lequel le second élément optique (48) comprend une seconde surface d'entrée du faisceau (72) et une seconde surface de sortie du faisceau (74) coupées chacune par l'axe de direction du faisceau ; **caractérisé en ce que** la première surface de sortie du faisceau (68) est parallèle à la seconde surface d'entrée du faisceau (72) et au plan X-Y.

2. Appareil de fabrication additive selon la revendication 1, dans lequel :
la première surface d'entrée du faisceau (66) occupe un premier plan d'entrée du faisceau définissant un premier angle d'entrée du faisceau par rapport au plan X-Y, et la première surface de sortie du faisceau (68) occupe un premier plan de sortie du faisceau définissant un premier angle de sortie du faisceau par rapport au plan X-Y.

3. Appareil de fabrication additive selon la revendication 1 ou 2, dans lequel
la seconde surface d'entrée du faisceau (72) occupe un second plan d'entrée du faisceau définissant un second angle d'entrée du faisceau par rapport au plan X-Y, et une seconde surface de sortie du faisceau (74) occupe un second plan de sortie du faisceau définissant un second angle de sortie du faisceau par rapport au plan X-Y, une différence entre le second angle d'entrée du faisceau et le second angle de sortie du faisceau définissant un second angle de déviation du faisceau variable en continu par rapport à l'axe de direction du faisceau.

4. Appareil de fabrication additive selon la revendication 1 ou 3, dans lequel :
le premier angle d'entrée du faisceau est complémentaire du second angle de sortie du faisceau.

5. Appareil de fabrication additive selon la revendication 1, 3 ou 4, dans lequel :
le premier élément optique (46) comprend un premier prisme cale avec la surface d'entrée du premier élément optique adaptée pour recevoir un faisceau laser venant en sens inverse depuis l'appareil à faisceau laser ; et
le second élément optique (48) comprend un second prisme cale avec une surface d'entrée du second élément optique adjacente à la surface de sortie du premier prisme cale, et une surface de sortie du second élément optique faisant face à l'emplacement de fabrication.

6. Appareil de fabrication additive selon une quelconque revendication précédente, dans lequel l'axe de direction du faisceau est disposé perpendiculairement au plan X-Y, dans lequel une sortie du générateur de faisceau laser est éventuellement alignée avec l'axe de direction du faisceau.

7. Appareil de fabrication additive selon une quelconque revendication précédente, dans lequel :
le dispositif de commande est adapté pour faire tourner le premier élément optique (46) à une première vitesse de rotation variable, faire tourner le second élément optique (48) à une seconde vitesse de rotation variable, et ainsi gérer un décalage de phase entre les premier et second éléments optiques (46, 48) pour commander un angle de direction de faisceau instantané sur la totalité du trajet de balayage non linéaire continu sans désactiver le générateur de faisceau laser (26).

8. Procédé de fonctionnement d'un appareil de fabrication additive selon la revendication 1, le procédé comprenant :
la fourniture des matières premières à la surface de fabrication disposée le long d'un plan X-Y sur une surface de travail de l'appareil ;
la génération du faisceau laser à un emplacement de départ de faisceau espacé de la surface de fabrication ; et
la direction du faisceau laser à travers le premier élément optique et le second élément optique adjacent supportés chacun de manière rotative dans le boîtier et disposés le long du trajet de déplacement du faisceau entre l'emplacement de départ du faisceau et la fabrication, le premier élément optique et le second élément optique pouvant tourner indépendamment et en continu autour d'un axe de direction du faisceau perpendiculaire à la surface de fabrication ;
dans lequel le dispositif de commande gère les vitesses de rotation relatives et absolues des premier et second éléments optiques, de sorte que les premier et second éléments optiques redirigent le faisceau laser du générateur de faisceau laser pour former un trajet de balayage non linéaire continu le long et sur la totalité de la surface de fabrication sans désactiver le générateur de faisceau laser, la surface de fabrication comportant la partie de périmètre, la partie de transition et la partie centrale.

9. Procédé selon la revendication 8, comprenant en outre :
la direction du faisceau laser de manière paramétrique sur au moins une partie de la surface de fabrication.

10. Procédé selon la revendication 9, dans lequel l'étape de direction comprend :
le positionnement de manière rotative du premier élément optique autour de l'axe de direction du faisceau pour faire varier un premier angle de déviation du faisceau.

11. Procédé selon la revendication 9 ou 10, dans lequel l'étape de direction comprend :
le positionnement de manière rotative du second élément optique autour de l'axe de direction du faisceau pour faire varier un second angle de déviation du faisceau.

12. Procédé selon l'une quelconque des revendications 9 à 11, dans lequel l'étape de direction comprend :
la transmission d'au moins l'un parmi : une première vitesse de rotation au premier élément optique et une seconde vitesse de rotation au second élément optique ; et
pendant l'étape de transmission, la commande d'un déphasage du premier élément optique et du second élément optique pour définir un trajet de direction de faisceau non linéaire sur l'emplacement de fabrication par rapport à l'axe de direction du faisceau.

13. Procédé selon la revendication 12, dans lequel la première vitesse de rotation est différente de la seconde vitesse de rotation.

14. Procédé selon l'une quelconque des revendications 8 à 13, dans lequel le premier élément optique comprend un premier prisme cale, et le second élément optique comprend un second prisme cale plus grand que le premier prisme cale.
